# EUROPEAN PATENT APPLICATION

(11) **EP 4 112 683 A1**
(43) Date of publication of application: **04.01.2023**
(21) Application number: 21761589.7
(22) Date of filing: 19.02.2021
(51) Int. Cl.: C08L 3/08, C08L 33/02, C08L 51/00, H01M 4/13, H01M 4/139, H01M 4/62

(54) **COMPOSITE PARTICLES FOR ELECTROCHEMICAL ELEMENT, PRODUCTION METHOD, ELECTRODE FOR ELECTROCHEMICAL ELEMENT, AND ELECTROCHEMICAL ELEMENT**

(30) Priority: 26.02.2020 JP 2020030904
(71) Applicant: Zeon Corporation, Tokyo 100-8246 (JP)
(72) Inventor: ISSHIKI, Yasuhiro, Tokyo 100-8246 (JP)
(74) Representative: Hansen, Norbert
(86) International application number: PCT/JP2021/006366
(87) International publication number: WO 2021/172208

(57) **Abstract**

A composite particle for an electrochemical element including an electrode active material and a granular polymer, wherein the granular polymer is composed of a graft polymer, the graft polymer has a molecular structure which includes a specific backbone portion and a graft portion bonded to the backbone portion, the graft portion being a hydrophilic graft chain, a content ratio of the graft portion in the graft polymer is 1 part by weight or more and 40 parts by weight or less relative to 100 parts by weight of the backbone portion, and an angle of repose of the composite particle is 20° to 40°.

Also provided are a producing method of the composite particle, an electrode for an electrochemical element including the composite particle, and an electrochemical element including the same.

## Description

### Field

The present invention relates to composite particles for an electrochemical element, a producing method, an electrode for an electrochemical element, and an electrochemical element.

### Background

An electrochemical element such as a lithium ion secondary battery usually includes electrodes such as a positive electrode and a negative electrode. The electrode usually includes a current collector and a mixture layer that is provided on the surface of the current collector and contains an electrode active material. In many cases, the mixture layer is formed by a method including preparing a slurry containing a material constituting the mixture layer and a solvent, applying the slurry onto the surface of a current collector to form a layer of the slurry, and drying this layer. The performance of electrodes largely affects the performance of electrochemical elements, and thus the materials constituting the mixture layer have been widely investigated. For example, materials constituting a mixture layer in an electrode of a lithium ion secondary battery have been widely investigated. More specifically, a binding agent that is one of the materials constituting the mixture layer has been widely investigated (for example, Patent Literatures 1 to 4).

### Citation List

### Patent Literature

Patent Literature 1: Japanese Patent Application Laid-Open No. 2013-247050 A
Patent Literature 2: Japanese Patent Application Laid-Open No. 2005-078935 A (publication corresponding thereto: U.S. Patent Application Publication No. 2005/064096)
Patent Literature 3: International Publication No. 2011/024789
Patent Literature 4: International Publication No. 2019/039560 (publication corresponding thereto: U.S. Patent Application Publication No. 2020/243861)

### Summary

### Technical Problem

One of indices for the performance of an electrode is a peel strength, that is, a strength of adhesion of a mixture layer to a current collector. The peel strength affects the durability of an element. For example, when an electrode having a high peel strength is adopted in a lithium ion secondary battery, characteristics such as cycle characteristics and high-temperature storage characteristics can be enhanced. It has been known that when a block copolymer having an acidic functional group is used as a binding agent constituting a mixture layer aiming at improvement in peel strength, the peel strength can be improved (Patent Literature 4). However, a higher-level improvement in peel strength of the binding agent is demanded.

It has been known that when a mixture layer is formed using a block copolymer having an acidic functional group in a process including a pressing operation, a defect of so-called spring back may occur. That is, when an electrode provided with such a mixture layer is produced and then stored in a normal temperature and normal humidity environment, a defect such as an increase in film thickness of the mixture layer may occur.

Therefore, it is an object of the present invention to provide a constituent element of an electrochemical element that can improve a peel strength of an electrode, suppress spring back of the electrode, and improve cycle characteristics and high-temperature storage characteristics of the electrochemical element, and a method for producing the same.

It is a further object of the present invention to provide an electrode for an electrochemical element that has a high peel strength, and can suppress spring back and improve cycle characteristics and high-temperature storage characteristics of the electrochemical element, and an electrochemical element having improved cycle characteristics and high-temperature storage characteristics.

### Solution to Problem

In order to solve the aforementioned problems, the present inventor has investigated the process in production of an electrode. In particular, the inventor has focused on a fact that the peel strength may be impaired by migration of a binding agent that occurs in a layer of a slurry when the slurry is applied to form a mixture layer, and considered employment of composite particles containing an active material and the binding agent instead of the slurry. Employment of the composite particles can avoid the occurrence of migration, while employment thereof makes it difficult to improve the adhesive property between a current collector and the mixture layer. In order to enhance the adhesive property, adjustment of components in the composite particles such as an increase in the containing amount of a block copolymer having an acidic functional group can be considered. However, the inventor has found that thereby the flowability of the composite particles may be decreased, the homogeneity of an electrode may be decreased, and cycle characteristics of a battery may be decreased. The inventor has further investigated these disadvantages, and found that employment of composite particles containing a specific granular polymer as the binding agent and having specific physical properties can solve the aforementioned problems. Thus, the present invention has been completed.

That is, the present invention is as follows.
(1) A composite particle for an electrochemical element comprising an electrode active material and a granular polymer, wherein
   the granular polymer is composed of a graft polymer,
   the graft polymer has a molecular structure which includes a backbone portion and a graft portion bonded to the backbone portion, the graft portion being a hydrophilic graft chain,
   the backbone portion contains an aromatic vinyl block region composed of an aromatic vinyl monomer unit and a conjugated diene region composed of an aliphatic conjugated diene unit of 4 or more carbon atoms, and a content ratio of the conjugated diene region in 100% by weight of the backbone portion is 50% by weight or more and 99% by weight or less,
   a content ratio of the graft portion in the graft polymer is 1 part by weight or more and 40 parts by weight or less relative to 100 parts by weight of the backbone portion, and
   an angle of repose of the composite particle is 20° to 40°.
(2) The composite particle for an electrochemical element according to (1), further comprising
   carboxymethylcellulose.
(3) The composite particle for an electrochemical element according to (1) or (2), further comprising an acidic functional group-containing water-soluble polymer with a weight-average molecular weight (MW) of 1,500 to 50,000.
(4) The composite particle for an electrochemical element according to any one of (1) to (3), further comprising an electroconductive auxiliary agent.
(5) The composite particle for an electrochemical element according to (4), wherein the electroconductive auxiliary agent contains any of graphene and carbon nanotube.
(6) The composite particle for an electrochemical element according to any one of (1) to (5), wherein a volume-average particle diameter thereof is 10 µ to 200 µm.
(7) A producing method of the composite particle for an electrochemical element according to any one of (1) to (6), comprising:
   a step (A) of granulating a mixture containing an electrode active material and a granular polymer.
(8) The producing method according to (7), wherein an ammonium salt of the graft polymer is used as a material for preparing the mixture in the step (A).
(9) The producing method according to (7) or (8), wherein:
   the mixture contains carboxymethylcellulose, an acidic functional group-containing water-soluble polymer, or both of them, and
   an ammonium salt of the carboxymethylcellulose, an ammonium salt of the acidic functional group-containing water-soluble polymer, or both of them are used as a material for preparing the mixture in the step (A).
(10) An electrode for an electrochemical element comprising a current collector, and a mixture layer disposed on the current collector, wherein
   the mixture layer includes the composite particle according to any one of (1) to (6).
(11) The electrode for an electrochemical element according to (10), wherein the mixture layer is a layer formed by pressure forming of the composite particle.
(12) The electrode for an electrochemical element according to (11), wherein the pressure forming is roll pressure forming.
(13) An electrochemical element comprising the electrode for an electrochemical element according to any one of (10) to (12).

### Advantageous Effects of Invention

The present invention can provide a constituent element of an electrochemical element that can improve the peel strength of an electrode, suppress spring back of the electrode, and improve cycle characteristics and high-temperature storage characteristics of the electrochemical element, and a method for producing the same.

Furthermore, the present invention can provide an electrode for an electrochemical element that has a high peel strength, and can suppress spring back and improve cycle characteristics and high-temperature storage characteristics of the electrochemical element, and an electrochemical element having improved cycle characteristics and high-temperature storage characteristics.

### Description of Embodiments

Hereinafter, the present invention will be described in detail with reference to embodiments and examples. However, the present invention is not limited to the embodiments and examples described hereinafter, and may be freely modified for implementation without departing from the scope of claims of the present invention and the scope of their equivalents.

In a polymer produced by copolymerization of a plurality of types of monomers, the proportion of a structural unit formed by polymerization of a certain monomer in the aforementioned polymer usually coincides with the ratio (charging ratio) of the certain monomer relative to all the monomers used in the polymerization for the polymer, unless otherwise specified.

A molecule or a structure that is a part of the molecule, such as a polymerized unit, is not restricted by a method for producing the molecule or the structure. For example, an aromatic vinyl monomer unit is a unit having a structure formed by polymerization of an aromatic vinyl monomer, but the aromatic vinyl monomer unit also includes a unit that has the same structure as the structure formed by polymerization of an aromatic vinyl monomer and is formed by a formation method other than that polymerization.

### (1. Composite particles)

Composite particles of the present invention are composite particles for an electrochemical element containing an electrode active material and a granular polymer.

The composite particles contain both the electrode active material and the granular polymer in a single particle piece. Use of such composite particles as a material for an electrochemical element can avoid migration of the granular polymer as a binding agent. Specifically, when the composite particles are used as a material forming an electrode mixture layer without pulverization, dissolution, and the like, the uniformity of concentration of the granular polymer relative to the electrode active material can be maintained in the electrode mixture layer.

### (1.1. Electrode active material)

As the electrode active material contained in the composite particles, various types of active materials that may be used for an electrode of an electrochemical element may appropriately be selected for use. For example, when an electrochemical element to be produced is a secondary battery, examples of the electrode active material may include a carbon material and an alloy. A carbon material is preferable. Preferable examples of the carbon material may include graphite. Use of such a preferable material can improve cycle characteristics of the electrochemical element to be obtained.

The content ratio of the electrode active material in 100% by weight of the composite particles is preferably 90% by weight or more, more preferably 92% by weight or more, and still more preferably 95% by weight or more, and is preferably 99.5% by weight or less, more preferably 99% by weight or less, and still more preferably 98.5% by weight or less. When the content ratio of the electrode active material is equal to or more than the aforementioned lower limit, a high electrochemical element capacity can be obtained. When the content ratio of the electrode active material is equal to or less than the aforementioned upper limit, good high-temperature storage characteristics can be obtained.

### (1.2. Granular polymer)

The granular polymer is a granule of a specific graft polymer. In the following, the specific graft polymer may be referred to as a graft polymer (G).

The graft polymer (G) has a molecular structure which includes a backbone portion and a graft portion bonded to the backbone portion. The backbone portion is usually a linear polymerized chain, from which the graft portion extends in a branched fashion. The backbone portion of the graft polymer (G) has a chain-like structure containing an aromatic vinyl block region and a conjugated diene region. The graft portion of the graft polymer (G) is a hydrophilic graft chain.

The aromatic vinyl block region is a region containing an aromatic vinyl monomer unit as a polymerization unit. That is, the aromatic vinyl block region is a region having a structure in which aromatic vinyl monomer units are linked. However, one aromatic vinyl block region may include, in addition to the aromatic vinyl monomer unit, a coupling site such as one generated with a coupling reaction in a synthesis process.

The aromatic vinyl monomer unit is a unit having a structure formed by polymerization of an aromatic vinyl monomer. As the aromatic vinyl monomer units constituting one aromatic vinyl block region, one type thereof may be solely used, and two or more types thereof may also be used. However, it is preferable to use only one type of aromatic vinyl monomer unit. Examples of the aromatic vinyl monomers may include styrene, styrenesulfonic acid and salts thereof, α-methylstyrene, p-t-butylstyrene, butoxystyrene, vinyltoluene, chlorostyrene, vinylnaphthalene, and mixtures thereof. Among these, styrene is preferable. By having a unit formed by the aforementioned preferable monomer, good high-temperature storage characteristics can be obtained.

The ratio of the aromatic vinyl monomer unit relative to 100% by weight of the backbone portion of the graft polymer (G) is preferably 10% by weight or more, more preferably 20% by weight or more, and still more preferably 25% by weight or more, and is preferably 50% by weight or less, more preferably 40% by weight or less, and still more preferably 35% by weight or less. When the ratio of the aromatic vinyl monomer unit is equal to or higher than the aforementioned lower limit, good high-temperature storage characteristics can be obtained. When the ratio of the aromatic vinyl monomer unit is equal to or lower than the aforementioned upper limit, a high peel strength can be obtained.

The conjugated diene region is a region containing an aliphatic conjugated diene unit of 4 or more carbon atoms as a polymerization unit. That is, the conjugated diene region is a region having a structure in which aliphatic conjugated diene units of 4 or more carbon atoms are linked. However, one conjugated diene region may include, in addition to the aliphatic conjugated diene unit, a coupling site such as one generated with a coupling reaction in a synthesis process.

The aliphatic conjugated diene unit of 4 or more carbon atoms is a unit having a structure formed by polymerization of an aliphatic conjugated diene monomer of 4 or more carbon atoms. As the aliphatic conjugated diene monomer units constituting one aliphatic conjugated diene region, one type thereof may be solely used, and two or more types thereof may also be used. However, it is preferable to use only one type of aliphatic conjugated diene monomer unit. Examples of the aliphatic conjugated diene monomer of 4 or more carbon atoms may include butadiene, isoprene, 1,3-pentadiene, 2,3-dimethyl-1,3-butadiene, and mixtures thereof. Among these, butadiene and isoprene are preferable, and butadiene is more preferable. By having a unit formed by the aforementioned preferable monomer, a good thermal stability can be obtained.

The ratio of the aliphatic conjugated diene monomer unit of 4 or more carbon atoms relative to 100% by weight of the backbone portion of the graft polymer (G) is 50% by weight or more, preferably 60% by weight or more, and more preferably 65% by weight or more, and is 90% by weight or less, preferably 80% by weight or less, and more preferably 75% by weight or less. When the ratio of the aliphatic conjugated diene monomer unit of 4 or more carbon atoms is equal to or higher than the aforementioned lower limit, a high peel strength can be obtained. When the ratio of the aliphatic conjugated diene monomer unit of 4 or more carbon atoms is equal to or lower than the aforementioned upper limit, good high-temperature storage characteristics can be obtained.

The graft portion of the graft polymer (G) is a hydrophilic graft chain. Specific examples of the hydrophilic graft chain may include a chain constituted by a polymerization unit formed by polymerization of a hydrophilic monomer, a macromonomer, and a mixture thereof. As the polymerization units constituting the hydrophilic graft chain, one type thereof may be solely used, and two or more types thereof may also be used. When the graft polymer (G) has such a hydrophilic graft chain, an advantageous effect of suppressing spring back can be obtained.

Examples of the hydrophilic monomer may include acrylic acid, methacrylic acid, itaconic acid, maleic acid, fumaric acid, 2-hydroxyethyl acrylate (β-HEA), vinyl sulfonic acid, and mixtures thereof. Among these, acrylic acid, methacrylic acid, itaconic acid, 2-hydroxyethylacrylate and mixtures thereof are preferable, and methacrylic acid is more preferable. As the macromonomer, a macropolymer containing an acidic group may be used. For example, a macromonomer of a polycarboxylic acid-based polymer is preferably used. By having a unit formed by the aforementioned preferable monomer, a good spring back suppressing effect can be obtained.

The graft polymer (G) and other compounds that constitute components of the composite particles (such as carboxymethylcellulose, and an acidic functional group-containing water-soluble polymer) may have ionic groups in their molecular structure. Such ionic groups may exist in a form of a free acid or base, an anion or cation, or a salt with an optional counterion. For example, the hydrophilic graft chain of the graft polymer (G) may have a carboxyl group. Such a carboxylic group may be present in a form of a free acid group (i.e., -COOH), an anionic group (i.e., -COO⁻), or a salt with an optional cation.

The content ratio of the graft portion in the graft polymer (G) is 1 part by weight or more, preferably 3 parts by weight or more, and more preferably 5 parts by weight or more, and is 40 parts by weight or less, preferably 20 parts by weight or less, more preferably 10 parts by weight or less, relative to 100 parts by weight of the backbone portion. When the content ratio of the graft portion is equal to or higher than the aforementioned lower limit, a high peel strength can be obtained. When the content ratio of the graft portion is equal to or lower than the aforementioned upper limit, good cycle characteristics can be obtained.

The method for producing the graft polymer (G) is not particularly limited and may be produced by a known producing method. For example, the graft polymer (G) may be produced by the producing method described in International Publication No. 2019/039560.

The content ratio of the granular polymer in 100% by weight of the composite particles is preferably 0.2% by weight or more, more preferably 0.3% by weight or more, and still more preferably 0.5% by weight or more, and is preferably 5% by weight or less, more preferably 3% by weight or less, and still more preferably 2% by weight or less. When the content ratio of the granular polymer is equal to or higher than the aforementioned lower limit, a high peel strength can be obtained. When the content ratio of the granular polymer is equal to or lower than the aforementioned upper limit, good cycle characteristics can be obtained.

### (1.3. Optional component in composite particles: carboxymethylcellulose)

The composite particles of the present invention may contain, as an optional component, carboxymethylcellulose. From the viewpoint of obtaining an effect as a thickener and from the viewpoint of obtaining good high-temperature storage characteristics and good cycle characteristics, the carboxymethylcellulose preferably has a molecular weight of more than 50,000, and preferably 100,000 or more. The upper limit of the molecular weight is not particularly limited, and may be, for example, 1,000,000 or less. The molecular weight may be a weight-average molecular weight. The molecular weight may be measured by a measurement method such as GPC.

The content ratio of carboxymethylcellulose in 100% by weight of the composite particles is preferably 0.3% by weight or more, more preferably 0.4% by weight or more, and still more preferably 0.5% by weight or more, and is preferably 5% by weight or less, more preferably 3% by weight or less, and still more preferably 2% by weight or less. When the content ratio of carboxymethylcellulose is equal to or higher than the aforementioned lower limit, good high-temperature storage characteristics and good cycle characteristics can be obtained. When the content ratio of carboxymethylcellulose is equal to or lower than the aforementioned upper limit, good cycle characteristics can be obtained.

### (1.4. Optional component in composite particles: Acidic functional group-containing water-soluble polymer)

The composite particles of the present invention may contain, as an optional component, an acidic functional group-containing water-soluble polymer. The term "water-soluble" polymer means that when 0.5 g of a polymer is dissolved in 100 g of water at a temperature of 25°C, insoluble contents are less than 1.0% by weight.

The acidic functional group-containing water-soluble polymer may be a polymer which contains a polymerization unit formed by polymerization of a monomer having an acidic functional group and a polymerizable unsaturated bond. The acidic functional group-containing water-soluble polymer may be a polymer other than carboxymethylcellulose. Examples of such polymers may include a polyacrylic acid, a polymethacrylic acid, a polyitaconic acid, a polymaleic acid, a polyfumaric acid, a poly-2-hydroxyethyl acrylate (PHEA), a poly-2-hydroxyethyl methacrylate (PHEMA), and mixtures thereof. Among these, a polyacrylic acid, a polymethacrylic acid, a polyitaconic acid, a poly-2-hydroxyethylacrylate, and mixtures thereof are preferable, and a polymethacrylic acid is more preferable. By adopting the aforementioned preferable polymer, good cycle characteristics can be obtained.

The molecular weight of the acidic functional group-containing water-soluble polymer is 1500 or more, preferably 2500 or more, and more preferably 5000 or more, and is 50000 or less, preferably 30000 or less, and more preferably 20000 or less. When the molecular weight is equal to or higher than the aforementioned lower limit, a high peel strength can be obtained. The molecular weight is a weight-average molecular weight. The molecular weight may be measured by a measurement method such as GPC.

The content ratio of the acidic functional group-containing water-soluble polymer in 100% by weight of the composite particles is preferably 0.01% by weight or more, more preferably 0.02% by weight or more, and still more preferably 0.03% by weight or more, and is preferably 1.0% by weight or less, more preferably 0.5% by weight or less, and still more preferably 0.3% by weight or less. When the content ratio of the acidic functional group-containing water-soluble polymer is equal to or higher than the aforementioned lower limit, a good spring back suppressing effect can be obtained. When the content ratio of the acidic functional group-containing water-soluble polymer is equal to or lower than the aforementioned upper limit, good cycle characteristics can be obtained.

### (1.5. Optional component in composite particles: Electroconductive auxiliary agent)

The composite particles of the present invention may contain, as an optional component, an electroconductive auxiliary agent. The electroconductive auxiliary agent is a component for ensuring electrical contact between the electrode active materials. Examples of the electroconductive auxiliary agent may include carbon black (e.g., acetylene black, Ketjen black (registered trademark), furnace black, etc.), single-layer or multi-layered carbon nanotubes (multi-layered carbon nanotubes include a cup stack type), carbon nanohorns, vapor grown carbon fibers, milled carbon fibers obtained by crushing polymer fibers after firing, single-layer or multi-layered graphene, conductive carbon materials such as carbon nonwoven sheets obtained by firing a nonwoven fabric made of polymer fibers, and fibers or foils of various metals. These may be solely used. Alternatively, two or more types thereof may be used in combination. Among these, the electroconductive auxiliary agent preferably contains a carbon nanotube (hereinafter, sometimes referred to as "CNT"). Herein, usually, CNTs tend to be easily aggregated, and it is difficult to accomplish dispersion thereof. However, when the composite particles according to the present invention contain an acidic functional group-containing water-soluble polymer which is an optional component, even an electroconductive auxiliary agent containing CNT can be well dispersed.

### (1.6. Properties of composite particles)

The angle of repose of the composite particles of the present invention is within a specific range. The angle of repose may be a value measured after the composite particles are allowed to stand in an environment at a temperature of 25±3°C and a relative humidity of 50±5% for 1 week. The specific measurement condition for the angle of repose may be as described in Examples of the present application.

The angle of repose of the composite particles of the present invention is 20° or more, preferably 22° or more, and more preferably 25° or more, and is 40° or less, preferably 38° or less, and more preferably 35° or less. The angle of repose of the composite particles measured under the aforementioned measurement condition does not depend on the amount of water absorbed into the composite particles, and is a value determined depending on the types and the content ratios of the granular polymer constituting the composite particles and the other components, the shapes and sizes of the composite particles, and the like. According to the finding of the present inventor, when the angle of repose is equal to or more than the aforementioned lower limit, a high peel strength can be obtained. When the angle of repose is equal to or less than the aforementioned upper limit, good cycle characteristics can be obtained.

It is preferable that the volume-average particle diameter of the composite particles of the present invention is within a specific range. The volume-average particle diameter is preferably 10 µm or more, more preferably 30 µm or more, and still more preferably 50 µm or more, and is preferably 200 µm or less, more preferably 150 µm or less, and still more preferably 120 µm or less. When the volume-average particle diameter is equal to or more than the aforementioned lower limit, good high-temperature storage characteristics can be obtained, and the angle of repose can easily be adjusted to a value equal to or less than a desired upper limit. When the volume-average particle diameter is equal to or less than the aforementioned upper limit, good cycle characteristics can be obtained, and the angle of repose can easily be adjusted to a value equal to or more than a desired lower limit. The volume-average particle diameter may appropriately be adjusted by selection of a material for the composite particles and control of granulation conditions. The volume-average particle diameter may be measured with a laser diffraction/scattering particle diameter distribution measurement device (e.g., product name "MICROTRAC MT-3200II" manufactured by NIKKISO CO., LTD.). The specific measurement conditions may be as described in Examples of the present application.

### (2. Method for producing composite particles)

The composite particles of the present invention may be produced by a producing method including a step (A) of granulating a mixture containing the electrode active material and the granular polymer. Hereinafter, this producing method will be described as the method for producing the composite particles of the present invention.

Specific examples of granulation operation in the step (A) may include spray drying granulation, fluidized bed granulation, oscillating granulation, granulation by solidification, and granulation by freeze drying. Among these, spray drying granulation and fluidized bed granulation are preferable, and spray drying granulation is particularly preferable. By using the preferable granulation method described above, composite particles that are excellent in characteristics such as cycle characteristics can efficiently be produced.

In spray drying granulation, a slurry composition containing the electrode active material, the granular polymer, and if needed, the optional component may be prepared as the mixture. In the step (A), granulation may be performed using this slurry composition with an appropriate spray drying granulation device. In performing fluidized bed granulation, a mixed liquid containing components other than the electrode active material may be supplied to a fluidized bed in which a powder of the electrode active material is fluidized to form the mixture, and at the same time, granulation may be performed.

In preparing the mixture (including the mixed liquid at the stage before preparation of the mixture), a salt of the graft polymer may be used as the graft polymer constituting the granular polymer among the materials. In particular, the hydrophilic graft chain of the graft polymer usually has an ionic group, and thus preparation is easy in a case where such a group is a salt with an appropriate counterion. When the ionic group is an anionic group such as a carboxyl group, a salt with a counter cation may be used. Herein, preferable examples of the cation may include a sodium ion, an ammonium ion, a lithium ion, potassium ions, and mixtures thereof. Among these, an ammonium ion is particularly preferable. When an ammonium ion is adopted as the material for preparation of the mixture, the ammonium ion may be volatilized at the granulation stage or in a subsequent process such as drying. As a result, an effect of suppressing spring back can further be improved.

Similarly, when a mixture containing carboxymethylcellulose, the acidic functional group-containing water-soluble polymer, or both is prepared as the mixture, salts thereof may be used as the material for preparation. When the salts have an anionic group such as a carboxyl group as an ionic group, examples of counter cations may include a sodium ion, an ammonium ion, a lithium ion, a potassium ion, and mixtures thereof. Among these, an ammonium ion is particularly preferable. When an ammonium ion is adopted as the material for preparation of the mixture, the effect of suppressing spring back can further be improved.

The volume-average particle diameter of the granular polymer in the mixture may be preferably 0.01 to 1.0 µm. The volume-average particle diameter of the electrode active material in the mixture may be preferably 1.0 to 30 µm.

When spray drying granulation is performed and when fluidized bed granulation is performed, the mixture is dried at an appropriate drying temperature in the granulation process. The drying temperature is preferably 160°C or higher, more preferably 170°C or higher, and still more preferably 180°C or higher, and is preferably 250°C or lower, more preferably 230°C or lower, and still more preferably 200°C or lower. When the drying temperature is equal to or higher than the aforementioned lower limit, a good effect of suppressing spring back, good cycle characteristics, and good high-temperature storage characteristics can be obtained. When the drying temperature is equal to or lower than the aforementioned upper limit, a high peel strength and good cycle characteristics can be obtained.

### (3. Application of composite particles)

The composite particles of the present invention are composite particles for an electrochemical element. That is, the composite particles of the present invention may be used as a material for a member constituting an electrochemical element. Examples of the electrochemical element may include a secondary battery such as a lithium ion secondary battery. Examples of the member constituting the electrochemical element may include an electrode such as a negative electrode. Hereinafter, such an electrode will be described as an electrode for an electrochemical element of the present invention.

### (4. Electrode and method for producing the same)

The electrode for an electrochemical element of the present invention includes a current collector and a mixture layer provided on the aforementioned current collector, and the mixture layer contains the composite particles of the present invention. The mixture layer is preferably a layer formed by pressure forming of the composite particles. Herein, the pressure forming is preferably roll pressure forming. Specifically, the composite particles or a mixed material containing the composite particles is supplied onto the surface of a current collector while keeping their particle state without being pulverized, dissolved, or the like, to form a layer of the composite particles, and such a layer is pressurized by a roller to have a desired density. Thus, the mixture layer may be formed. In such a mixture layer, migration in the production process and after the production is avoided, and thus the uniformity of concentration of the granular polymer relative to the electrode active material can be maintained in the electrode mixture layer. Therefore, a high peel strength can be obtained, spring back can be suppressed, and cycle characteristics and high-temperature storage characteristics of an electrochemical element can be improved.

### (5. Electrochemical element)

An electrochemical element of the present invention includes the electrode for an electrochemical element of the present invention. The electrochemical element of the present invention may include the electrode for an electrochemical element of the present invention as a positive electrode, a negative electrode, or both. In particular, it is preferable that the electrochemical element includes the electrode for an electrochemical element of the present invention as a negative electrode. Since the electrochemical element of the present invention includes the electrode for an electrochemical element of the present invention, the electrochemical element can achieve improved cycle characteristics and high-temperature storage characteristics.

### Examples

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The operation described below was performed under the conditions of normal temperature and normal pressure, unless otherwise specified.

In a polymer produced by polymerization of a plurality of types of monomers, the proportion of a monomer unit formed by polymerization of a certain monomer in the aforementioned polymer usually coincides with the ratio (charging ratio) of the certain monomer relative to all the monomers used in polymerization for the polymer, unless otherwise specified. In Examples and Comparative Examples, the volume-average particle diameter of a granular polymer, the volume-average particle diameter and the angle of repose of composite particles, the peel strength and the spring back of an electrode mixture layer, and the cycle characteristics and the high-temperature storage characteristics of a secondary battery were evaluated by the following methods.

### (Volume-average particle diameter of granular polymer)

The volume-average particle diameter (D50) of the granular polymer was measured with a laser diffraction particle diameter distribution measurement device (product name "LS-230" manufactured by Beckmann Coulter, Inc.). Specifically, in an aqueous dispersion solution in which the solid content concentration of the granular polymer was adjusted to 0.1% by weight, the particle diameter of the granular polymer was measured with the aforementioned device, and a particle diameter at which a cumulative volume calculated from a small-diameter side in the obtained particle size distribution (on the basis of volume) reached 50% was determined as a volume-average particle diameter (µm).

### (Volume-average particle diameter of composite particles)

The particle diameter distribution (on the basis of volume) of the composite particles was measured with a laser diffraction/scattering particle diameter distribution measurement device (MICROTRAC MT-3200II manufactured by NIKKISO CO., LTD.). The particle diameter (median diameter) at which a cumulative volume calculated from a small-diameter side in the obtained particle diameter distribution reached 50% was determined.

### (Angle of repose of composite particles)

The composite particles produced in each of Examples and Comparative Examples were allowed to stand in an environment at a temperature of 25±3°C and a relative humidity of 50±5% for 1 week. Subsequently, the composite particles were passed through a 250 µm-sieve, and allowed to fall via a funnel on a table for measurement of angle of repose by using an angle-of-repose measurement device (Powder Tester PT-S) in a constant temperature and humidity chamber at a temperature of 25±3°C and a relative humidity of 50±5%. When the shape of mountain became stable, the angle of repose was measured.

### (Peel strength of electrode mixture layer)

The negative electrode was cut into a rectangle having a length of 100 mm and a width of 10 mm to obtain a test piece. A cellophane tape (in accordance with JIS Z1522) was attached to the surface of the test piece on the side of the negative electrode mixture layer, and fixed on a test stand with the surface of the test piece on a side of the current collector facing upward and the surface of the test piece on the side of the negative electrode mixture layer facing downward. The test stand was disposed so that the peel angle became 180°, an end of the current collector of the test piece was pulled and peeled off in a vertical direction at a pulling speed of 50 mm/minute, and the stress was measured. The measurement was performed 3 times, and the average value was calculated as a peel strength, and evaluated in accordance with the following criteria. Higher peel strength value is indicative of better adhesiveness of the negative electrode mixture layer to the current collector.

SA: The peel strength is 25 N/m or more.
A: The peel strength is 20 N/m or more and less than 25 N/m.
B: The peel strength is 15 N/m or more and less than 20 N/m.
C: The peel strength is 10 N/m or more and less than 15 N/m.
D: The peel strength is 5 N/m or more and less than 10 N/m.
E: The peel strength is less than 5 N/m.

### (Spring back of negative electrode mixture layer)

Spring back of the negative electrode mixture layer was evaluated on the basis of the density of an electrode mixture layer. Specifically, the prepared negative electrode was roll-pressed with the side of the negative electrode mixture layer being placed on the roller side. The condition of roll-pressing was a temperature of 25±3°C and a linear pressure of 1.8 t/cm. By the roll-pressing, the density of the electrode mixture layer was adjusted to 1.70 g/cm³. Subsequently, the negative electrode was allowed to stand in an environment at a temperature of 25±3°C and a relative humidity of 50±5% for 1 week. The density (g/cm³) of the negative electrode mixture layer of the negative electrode after allowing to stand was measured and evaluated in accordance with the following criteria. Higher density of the negative electrode mixture layer after allowing to stand is indicative of less occurrence of spring back in the negative electrode mixture layer and better production of the negative electrode.
A: The density of the electrode mixture layer is 1.67 g/cm³ or more.
B: The density of the electrode mixture layer is 1.63 g/cm³ or more and less than 1.67 g/cm³.
C: The density of the electrode mixture layer is 1.59 g/cm³ or more and less than 1.63 g/cm³.
D: The density of the electrode mixture layer is 1.55 g/cm³ or more and less than 1.59 g/cm³.
E: The density of the electrode mixture layer is less than 1.55 g/cm³.

### (Cycle characteristics of secondary battery)

After injection of the electrolytic solution, the lithium ion secondary battery was allowed to stand at a temperature of 25°C for 5 hours. Subsequently, the lithium ion secondary battery was charged to a cell voltage of 3.65 V at a temperature of 25°C by a 0.2-C constant current process, and subjected to an aging treatment in an open circuit at a temperature of 60°C for 12 hours. The lithium ion secondary battery was discharged to a cell voltage of 3.00 V at a temperature of 25°C by a 0.2-C constant current process. Subsequently, the lithium ion secondary battery was CC-CV charged (upper limit cell voltage: 4.20 V) by a 0.2-C constant current process, and then CC-discharged to 3.00 V by a 0.2-C constant current process. The charging and discharging by the 0.2-C constant current process was repeated 3 times at a temperature of 25°C.

After that, an operation of charging and discharging at a cell voltage of 4.20 to 3.00 V and a charging and discharging rate of 1.0 C in an environment at a temperature of 25°C was performed 100 cycles. The discharge capacity X1 of the first cycle and the discharge capacity X2 of the 100th cycle were recorded. From the discharge capacity X1 and the discharge capacity X2, a capacity change ratio represented by ΔC' = (X2/X1) × 100 (%) was determined and evaluated in accordance with the following criteria. Larger value of the capacity change ratio ΔC' is indicative of better cycle characteristics.
SA: ΔC' is 96% or more.
A: ΔC' is 95% or more and less than 96%.
B: ΔC' is 93% or more and less than 95%.
C: ΔC' is 90% or more and less than 93%.
D: ΔC' is 87% or more and less than 90%.
E: ΔC' is less than 87%.

### (High-temperature storage characteristics)

The lithium ion secondary battery was charged to a cell voltage of 4.2 V and then discharged to 3.0 V by a 0.5-C constant current process under an atmosphere of 25°C, and the initial discharge capacity C0 was measured. The lithium ion secondary battery was then charged to a cell voltage of 4.2 by a 0.5-C constant current process under an atmosphere of 25°C. Subsequently, the lithium ion secondary battery was stored under an atmosphere of 60°C (high-temperature storage) for 3 weeks. After the high-temperature storage, the lithium ion secondary battery was discharged to 3 V by a 0.5-C constant current process under an atmosphere of 25°C, and the residual capacity C1 after the high-temperature storage was measured.

The capacity retention ratio (%) = (residual capacity C1/initial discharge capacity C0) × 100 was determined and evaluated in accordance with the following criteria. Larger capacity retention ratio is indicative of better high-temperature storage characteristics of the lithium ion secondary battery.
SA: The capacity retention ratio is 93 or more.
A: The capacity retention ratio is 90% or more and less than 93%.
B: The capacity retention ratio is 85% or more and less than 90%.
C: The capacity retention ratio is 80% or more and less than 85%.
D: The capacity retention ratio is 75% or more and less than 80%.
E: The capacity retention ratio is less than 75%.

### (Example 1)

### (1-1. Granular polymer)

### (1-1-1. Block polymer solution)

Into a pressure-resistant reaction vessel, 233.3 kg of cyclohexane, 54.2 mmol of N,N,N',N'-tetramethylethylenediamine (hereinafter referred to as "TMEDA"), and 30.0 kg of styrene as an aromatic vinyl monomer were charged, and stirred at 40°C to obtain a mixture. To this mixture, 1806.5 mmol of n-butyl lithium as a polymerization initiator was added and heated to 50°C to perform a polymerization reaction for 1 hour. The polymerization conversion ratio of styrene after the polymerization reaction was 100%. While temperature control was performed so that the temperature was maintained at 50 to 60°C, 70.0 kg of 1,3-butadiene as an aliphatic conjugated diene monomer was continuously added to the pressure-resistant reaction vessel over 1 hour. After completion of addition of 1,3-butadiene, the temperature control to 50 to 60°C was maintained, and the polymerization reaction was continued for additional 1 hour. The polymerization conversion ratio of 1,3-butadiene was 100%. To the pressure-resistant reaction vessel, 722.6 mmol of dichlorodimethylsilane as a coupling agent was then added, the temperature control to 50 to 60°C was maintained, and a coupling reaction was performed for 2 hours to form a styrene-butadiene coupling block copolymer. In order to inactivate the active terminal, 3,612.9 mmol of methanol was added to the reaction liquid and sufficiently mixed. To 100 parts of this reaction liquid (containing 30.0 parts of the polymer component), 0.05 part of 4-((4,6-bis(octylthio)-1,3,5-triazin-2-yl)amino)-2,6-di-tertbutylphenol (H1) as a hindered phenol-based antioxidant and 0.09 part of 3,9-bis(octadecyloxy)-2,4,8,10-tetraoxa-3,9-diphosphaspiro(5.5)undecane (P1) as a phosphite-based antioxidant were added and mixed to obtain a mixed solution. The obtained mixed solution was added dropwise in small portions to hot water at 85 to 95°C, and the solvent was volatilized to obtain a deposit. This deposit was pulverized and dried by hot air at 85°C, and a dried substance containing a block polymer was collected.

The collected dried substance was dissolved in cyclohexane to prepare a block polymer solution having a block polymer concentration of 5.0%.

### (1-1-2. Phase inversion emulsification)

Sodium alkylbenzenesulfonate was dissolved in ion-exchanged water to prepare a 0.15% aqueous solution.

Into a tank, 1,000 g of the block polymer solution obtained in (1-1-1) and 1,400 g of the aqueous solution obtained above were charged and stirred to obtain a pre-mix. Subsequently, using a proportioning pump, the pre-mix was transferred from the tank to a high-pressure emulsifying and dispersing system "LAB1000" (manufactured by SPXFLOW) and circulated (pass number: 5) to obtain an emulsion liquid in which the pre-mix was subjected to phase inversion emulsification.

Subsequently, cyclohexane in the resulting emulsion liquid was distilled off under reduced pressure with a rotary evaporator. The distilled emulsion liquid was then centrifuged at 7,000 rpm for 10 minutes with a centrifugal separator (product name "Himac CR21N" manufactured by Hitachi Koki Co., Ltd.), and an upper layer portion was taken out for concentration.

The upper layer portion was finally filtered through a 100-mesh wire screen to obtain a block polymer latex that was an aqueous dispersion liquid containing a granular block polymer.

### (1-1-3. Graft polymerization and crosslinking)

The block polymer latex obtained in (1-1-2) was diluted by adding distilled water to obtain a dilute latex. The dilution ratio was 850 parts of water relative to 100 parts (solid content equivalent amount) of the granular block polymer. Into a polymerization reaction container equipped with a stirrer, inside air of which was replaced with nitrogen, the dilute latex was charged. The dilute latex was then warmed to a temperature of 30°C while stirring. In another container, 8 parts of methacrylic acid as an acidic group-containing monomer and 15 parts of distilled water were mixed to prepare a diluted methacrylic acid liquid. To this diluted methacrylic acid liquid, the dilute latex in the polymerization reaction container was added over 30 minutes. During the addition, the temperature was maintained to 30°C. As a result, 8 parts of methacrylic acid was added to 100 parts of the block polymer.

In yet another container, a solution containing 7 parts of distilled water and 0.01 part of ferrous sulfate (product name "Frost Fe" manufactured by Chubu Chelest Co., Ltd.) as a reducing agent was prepared. The obtained solution was added to the polymerization reaction container. 0.5 part of 1,1,3,3-tetramethylbutyl hydroperoxide (product name "PEROCTA H" manufactured by Nippon Oil & Fats Co., Ltd.) as an oxidant was then added thereto, and the mixture was reacted at 30°C for 1 hour, and further reacted at 70°C for 2 hours to obtain an aqueous solution of reaction product. To this aqueous solution of reaction product, a 1.0% by weight aqueous solution of sodium hydroxide was added to adjust the pH to 8. Subsequently, the solid content concentration of the aqueous solution of reaction product was adjusted to 40% by weight by heating and distillation under reduced pressure. As a result, a binding agent composition A for a negative electrode was obtained. In the binding agent composition A for a negative electrode, the polymerization conversion ratio was 99%, and the volume-average particle diameter of the granular polymer was 0.5 µm.

### (1-2. Slurry composition for negative electrode)

Into a planetary mixer, 97.4 parts of natural graphite (volume-average particle diameter: 22 µm, theoretical capacity: 360 mAh/g) as a negative electrode active material, 1.0 part (solid content equivalent amount) of an ammonium salt of carboxymethylcellulose (product number "DN-800H" available from Daicel FineChem Ltd.), and 0.1 part (solid content equivalent amount) of ammonium polymethacrylate (weight-average molecular weight: 10,000) as an acidic functional group-containing water-soluble polymer were charged. The mixture was diluted with ion-exchanged water so that the solid content concentration of the content in the mixer was 60%, and then kneaded at a rotation speed of 45 rpm for 60 minutes. After that, 1.5 parts as a solid content equivalent amount of the binding agent composition A for a negative electrode obtained in (1-1-3) was added, and the content in the mixer was kneaded at a rotation speed of 40 rpm for 40 minutes. Ion-exchanged water was added so that the viscosity (with a B-type viscometer, temperature: 25°C, rotor rotation number: 60 rpm) was 1,000±200 mPa·s, to prepare a slurry composition for a negative electrode.

### (1-3. Composite particles for negative electrode)

The slurry composition for a negative electrode obtained in (1-2) was supplied to a spray drier (product name "L-8i" manufactured by Ohkawara Kakohki Co., Ltd.), and then spray-dried with a rotary disc-type sharp edge atomizer (manufactured by Ohkawara Kakohki Co., Ltd., diameter: 65 mm) under conditions of a rotation number of 25,000 rpm, a hot air temperature of 180°C, and a temperature at a particle collecting outlet of 90°C, to obtain composite particles for a negative electrode having a volume-average particle diameter of 70 µm.

The angle of repose of the obtained composite particles for a negative electrode was measured.

### (1-4. Negative electrode)

The composite particles for a negative electrode obtained in (1-3) were supplied to rollers for pressing (roller temperature: 100°C, press linear pressure: 500 kN/m) of a roller press machine ("pressing and cutting rough surface heat roller" manufactured by HIRANO GIKEN KOGYO Co., Ltd.) using a fixed quantity feeder ("Nikka spray K-V" manufactured by Nikka Ltd.). Between the rollers for pressing, a copper foil having a thickness of 15 µm was inserted, and the composite particles supplied from the fixed quantity feeder were attached to the copper foil, and subjected to pressure molding at a molding speed of 1.5 m/minute. As a result, a negative electrode having the copper foil as a current collector and a negative electrode mixture layer formed on one surface of the copper foil was obtained. The weight per unit area of the negative electrode mixture layer was 13.0 mg/cm², and the density thereof was 1.65 g/cm³.

For the obtained negative electrode, the peel strength and the spring back were measured.

### (1-5. Positive electrode)

To a planetary mixer, 97 parts of an active material based on lithium-composite oxide of Co-Ni-Mn, NMC532 (LiNi_{0.5}Co_{0.2}Mn_{0.3}O₂) as a positive electrode active material, 1 part of acetylene black (product name "Li-400" manufactured by Denki Kagaku Kogyo Kabushiki Kaisha) as an electroconductive auxiliary agent, and 2 parts (solid content equivalent amount) of polyvinylidene fluoride (product name "#7208" available from Kureha Corporation) as a binding material were added and mixed. Furthermore, N-methyl-2-pyrrolidone (NMP) was gradually added as an organic solvent, and the mixture was stirred and mixed at a temperature of 25±3°C and a rotation number of 25 rpm to obtain a slurry composition for a positive electrode having a viscosity (with a B-type viscometer, temperature: 25±3°C, rotor: M4, rotor rotation number: 60 rpm) of 3,600 mPa·s.

The obtained slurry composition for a positive electrode was applied onto an aluminum foil having a thickness of 20 µm as a current collector with a comma coater so that the amount of the slurry composition applied was 22.5±0.5 mg/cm². The aluminum foil having the slurry composition was conveyed at a speed of 200 mm/minute in an oven at a temperature of 120°C over 2 minutes and in an oven at a temperature of 130°C over 2 minutes to dry the slurry composition on the aluminum foil. Thus, a primary material for a positive electrode having a positive electrode mixture layer formed on the current collector was obtained.

Subsequently, the side of the positive electrode mixture layer of the prepared primary material for a positive electrode was roll-pressed in an environment at a temperature of 25±3°C to obtain a positive electrode having a positive electrode mixture layer density of 3.20 g/cm³.

### (1-6. Separator)

As a separator composed of a separator substrate, a single layer polypropylene separator (product name "Celgard 2500" manufactured by Celgard, LLC.) was prepared.

### (1-7. Lithium ion secondary battery)

A layered laminate cell (equivalent to a default discharge capacity of 300 mAh) was produced using the negative electrode obtained in (1-4), the positive electrode obtained in (1-5), and the separator prepared in (1-6), placed in an aluminum package, and then dried under vacuum at 60°C for 10 hours. Subsequently, the aluminum package was filled with a 1.0 M LiPF₆ solution (solvent: a mixed solvent of ethylene carbonate (EC) and diethyl carbonate (DEC) at a volume ratio of 3/7, additive: 2% by volume (relative to the solvent) of vinylene carbonate) as an electrolytic solution. The aluminum package was closed by heat sealing at a temperature of 150°C so as to seal an opening of the aluminum package. Thus, a lithium ion secondary battery was produced. Using this lithium ion secondary battery, the cycle characteristics and the high-temperature storage characteristics were evaluated according to the aforementioned processes.

### (Examples 2 to 3)

A granular polymer, composite particles, a negative electrode, and a lithium ion secondary battery were obtained and evaluated by the same manner as that of Example 1 except that the amounts of styrene and 1,3-butadiene added in the polymerization reaction in the preparation of the block polymer solution of (1-1-1) were changed as shown in Table 1.

### (Example 4)

A granular polymer, composite particles, a negative electrode, and a lithium ion secondary battery were obtained and evaluated by the same manner as that of Example 1 except that a 1.0% by weight aqueous solution of ammonium was used instead of the 1.0% by weight aqueous solution of sodium hydroxide in the graft polymerization and crosslinking of (1-1-3).

### (Example 5)

A granular polymer, composite particles, a negative electrode, and a lithium ion secondary battery were obtained and evaluated by the same manner as that of Example 1 except that 8 parts of acrylic acid was used instead of methacrylic acid in the graft polymerization and crosslinking of (1-1-3).

### (Examples 6 and 7)

A granular polymer, composite particles, a negative electrode, and a lithium ion secondary battery were obtained and evaluated by the same manner as that of Example 1 except that the amount of methacrylic acid added in the graft polymerization and crosslinking of (1-1-3) was changed as shown in Table 1.

### (Examples 8 and 9)

A granular polymer, composite particles, a negative electrode, and a lithium ion secondary battery were obtained and evaluated by the same manner as that of Example 1 except that the amount of ammonium polymethacrylate added in the preparation of the slurry composition for a negative electrode of (1-2) was changed as shown in Table 2.

### (Example 10)

A granular polymer, composite particles, a negative electrode, and a lithium ion secondary battery were obtained and evaluated by the same manner as that of Example 1 except that 1.0 part (solid content equivalent amount) of a sodium salt of carboxymethylcellulose (Daicel Fine Chem Co., Ltd., product number "2200") was used instead of an ammonium salt of carboxymethylcellulose in the preparation of the slurry composition for a negative electrode of (1-2).

### (Examples 11 and 12)

A granular polymer, composite particles, a negative electrode, and a lithium ion secondary battery were obtained and evaluated by the same manner as that of Example 1 except that the hot air temperature in the preparation of the composite particles for negative electrode of (1-3) was changed as shown in Table 2.

### (Example 13)

### (13-1. Mixed liquid)

1.0 part (solid content equivalent amount) of an ammonium salt of carboxymethylcellulose as a thickener (Daicel Fine Chem Co., Ltd., product number "DN-800H"), 1.5 parts (solid content equivalent amount) of the binder composition A obtained in (1-1-3) of Example 1, and 45 parts of ion-exchanged water were added and mixed by a planetary mixer to obtain a mixed liquid (I).

### (13-2. Composite particles for negative electrode)

Subsequently, 97.4 parts of natural graphite (volume-average particle diameter: 22 µm, theoretical capacity: 360 mAh/g) as a negative electrode active material was supplied to a fluidized bed granulator ("Agromaster AGM-25PJ" manufactured by Hosokawa Micron Co., Ltd.), and the mixed liquid (I) was sprayed over 10 minutes in an air stream at 80°C to perform fluidized bed granulations. As a result, composite particles for a negative electrode having a particle diameter of 80 µm were obtained.

The angle of repose of the obtained composite particles for a negative electrode was measured.

### (13-3. Lithium ion secondary batteries, etc.)

A negative electrode and a lithium ion secondary battery were obtained and evaluated by the same manner as those of (1-4) to (1-7) of Example 1 except that the composite particles for a negative electrode obtained in (13-2) was used instead of the composite particles for a negative electrode obtained in (1-3).

### (Example 14)

A granular polymer, composite particles, a negative electrode, and a lithium ion secondary battery were obtained and evaluated by the same manner as that of Example 1 except that the rotation number of the atomizer in the preparation of the composite particles for a negative electrode of (1-3) was changed as shown in Table 2.

### (Example 15)

A granular polymer, composite particles, a negative electrode, and a lithium ion secondary battery were obtained and evaluated by the same manner as that of Example 1 except for the following change points.
- In the graft polymerization and crosslinking of (1-1-3), a 1.0% by weight aqueous solution of ammonium was used instead of the 1.0% by weight aqueous solution of sodium hydroxide.
- In the preparation of the slurry composition for a negative electrode of (1-2), the amount of natural graphite used was changed from 97.4 parts to 97.2 parts.
- In the preparation of the slurry composition for a negative electrode of (1-2), 0.2 part of graphene (sigma aldrich Co., Ltd., product number "Graphen powder") as an electroconductive auxiliary agent was charged into the planetary mixer together with the natural graphite, the ammonium salt of carboxymethylcellulose and ammonium polymethacrylate.

### (Example 16)

A granular polymer, composite particles, a negative electrode, and a lithium ion secondary battery were obtained and evaluated by the same manner as that of Example 1 except for the following change points.
- In the graft polymerization and crosslinking of (1-1-3), a 1.0% by weight aqueous solution of ammonium was used instead of the 1.0% by weight aqueous solution of sodium hydroxide.
- In the preparation of the slurry composition for a negative electrode of (1-2), the amount of natural graphite used was changed from 97.4 parts to 97.2 parts.
- In the preparation of the slurry composition for a negative electrode of (1-2), 0.2 part of carbon nanotubes ("FT7010" manufactured by Cnano Co., Ltd.) as an electroconductive auxiliary agent was charged into the planetary mixer together with the natural graphite, the ammonium salt of carboxymethylcellulose and ammonium polymethacrylate.

### (Example 17)

A granular polymer, composite particles, a negative electrode, and a lithium ion secondary battery were obtained and evaluated by the same manner as that of Example 1 except for the following change points.
- In the graft polymerization and crosslinking of (1-1-3), a 1.0% by weight aqueous solution of ammonium was used instead of the 1.0% by weight aqueous solution of sodium hydroxide.
- In the preparation of the slurry composition for a negative electrode of (1-2), the amount of natural graphite used was changed from 97.4 parts to 96.9 parts.
- In the preparation of the slurry composition for a negative electrode of (1-2), 0.5 part of carbon nanotubes ("FT7010" manufactured by Cnano Co., Ltd.) as an electroconductive auxiliary agent was charged into the planetary mixer together with the natural graphite, the ammonium salt of carboxymethylcellulose and ammonium polymethacrylate.

### (Comparative Example 1)

### (C1-1. Negative electrode)

The slurry composition for a negative electrode obtained in (1-2) of Example 1 was applied onto the surface of an electrolytic copper foil having a thickness of 15 µm as a current collector with a comma coater so that the amount thereof applied was 13±0.5 mg/cm². After that, the copper foil coated with the slurry composition for a negative electrode was conveyed at a speed of 400 mm/min in an oven at a temperature of 130°C over 4 minutes to dry the slurry composition on the copper foil. Thus, a primary material for a negative electrode having a negative electrode mixture layer on the current collector was obtained.

Subsequently, the side of the negative electrode mixture layer of the prepared primary material for a negative electrode was roll-pressed in an environment at a temperature of 25±3°C to obtain a positive electrode having a positive electrode mixture layer density of 1.65 g/cm³.

The peel strength and spring back of the obtained negative electrode were measured.

### (Cl-2. Lithium ion secondary battery)

A lithium ion secondary battery was obtained and evaluated by the same manner as that of (1-5) to (1-7) of Example 1 except that the composite particles for a negative electrode obtained in (C1-1) was used instead of the negative electrode obtained in (1-4).

### (Comparative Example 2)

A negative electrode and a lithium ion secondary battery were obtained and evaluated by the same manner as that of Comparative Example 1 except that the condition of conveyance for drying in the preparation of negative electrode of (C1-1) was changed to 4 minutes in an oven at a temperature of 180°C at a speed of 400 mm/min.

### (Comparative Example 3)

A granular polymer, composite particles, a negative electrode, and a lithium ion secondary battery were obtained and evaluated by the same manner as that of Example 1 except that the hot air temperature in the preparation of composite particles for a negative electrode of (1-3) was changed as shown in Table 3.

### (Comparative Example 4)

A granular polymer, composite particles, a negative electrode, and a lithium ion secondary battery were obtained and evaluated by the same manner as that of Example 1 except for the following change points.
- In the preparation of the block polymer solution of (1-1-1), the amounts of styrene and 1,3-butadiene added to the polymerization reaction were changed as shown in Table 3.
- In the preparation of composite particles for a negative electrode of (1-3), the hot air temperature was changed as shown in Table 3.

### (Comparative Example 5)

A granular polymer, composite particles, a negative electrode, and a lithium ion secondary battery were obtained and evaluated by the same manner as that of Example 1 except that graft polymerization and crosslinking were not performed in (1-1-3). That is, the block polymer latex obtained as a result of phase inversion emulsification of (1-1-2) did not undergo the process of (1-1-3), and in the preparation of the slurry composition for a negative electrode of (1-2), 1.5 parts of the block polymer latex as a solid content equivalent amount was used instead of the binder composition A for a negative electrode.

### Outlines and evaluation results of Examples and Comparative Examples are shown in Tables 1 to 3.

**Table 1**

| | Ex. 1 | Ex. 2 | Ex. 3 | Ex. 4 | Ex. 5 | Ex. 6 | Ex. 7 |
|---|---|---|---|---|---|---|---|
| Active material amount | 97.4 | 97.4 | 97.4 | 97.4 | 97.4 | 97.4 | 97.4 |
| Auxiliary agent type | - | - | - | - | - | - | - |
| Auxiliary agent amount | - | - | - | - | - | - | - |
| Granular polymer amount | 1.5 | 1.5 | 1.5 | 1.5 | 1.5 | 1.5 | 1.5 |
| Granular polymer diameter | 0.5 | 0.5 | 0.5 | 0.5 | 0.5 | 0.5 | 0.5 |
| St amount | 30 | 40 | 20 | 30 | 30 | 30 | 30 |
| Bd amount | 70 | 60 | 80 | 70 | 70 | 70 | 70 |
| Graft type | MAA | MAA | MAA | MAA | AA | MAA | MAA |
| Graft cations | Na⁺ | Na⁺ | Na⁺ | NH4⁺ | Na⁺ | Na⁺ | Na⁺ |
| Graft amount | 8 | 8 | 8 | 8 | 8 | 15 | 30 |
| Acidic polymer cation | NH4⁺ | NH4⁺ | NH4⁺ | NH4⁺ | NH4⁺ | NH4⁺ | NH4⁺ |
| Acidic polymer amount | 0.1 | 0.1 | 0.1 | 0.1 | 0.1 | 0.1 | 0.1 |
| Acidic polymer Mw | 10000 | 10000 | 10000 | 10000 | 10000 | 10000 | 10000 |
| CMC cation | NH4⁺ | NH4⁺ | NH4⁺ | NH4⁺ | NH4⁺ | NH4⁺ | NH4⁺ |
| CMC amount | 1 | 1 | 1 | 1 | 1 | 1 | 1 |
| Granulation method | Spray drying | Spray drying | Spray drying | Spray drying | Spray drying | Spray drying | Spray drying |
| Rotation number | 25000 | 25000 | 25000 | 25000 | 25000 | 25000 | 25000 |
| Granulation temperature | 180 | 180 | 180 | 180 | 180 | 180 | 180 |
| Particle size | 70 | 70 | 70 | 70 | 73 | 74 | 77 |
| Angle of repose | 34 | 29 | 36 | 27 | 26 | 23 | 21 |
| Weight per unit area | 13.0 | 13.0 | 13.0 | 13.0 | 13.0 | 13.0 | 13.0 |
| Density | 1.65 | 1.65 | 1.65 | 1.65 | 1.65 | 1.65 | 1.65 |
| Peel | A | B | A | A | A | B | B |
| SB | B | B | B | A | B | A | A |
| Cycle | A | A | B | A | A | B | C |
| High-temperature storage | A | B | B | A | A | A | A |

**Table 2**

| | Ex. 8 | Ex. 9 | Ex. 10 | Ex. 11 | Ex. 12 | Ex. 13 | Ex. 14 |
|---|---|---|---|---|---|---|---|
| Active material amount | 97 | 96.5 | 97.4 | 97.4 | 97.4 | 97.4 | 97.4 |
| Auxiliary agent type | - | - | - | - | - | - | - |
| Auxiliary agent amount | - | - | - | - | - | - | - |
| Granular polymer amount | 1.5 | 1.5 | 1.5 | 1.5 | 1.5 | 1.5 | 1.5 |
| Granular polymer diameter | 0.5 | 0.5 | 0.5 | 0.5 | 0.5 | 0.5 | 0.5 |
| St amount | 30 | 30 | 30 | 30 | 30 | 30 | 30 |
| Bd amount | 70 | 70 | 70 | 70 | 70 | 70 | 70 |
| Graft type | MAA | MAA | MAA | MAA | MAA | MAA | MAA |
| Graft cations | Na⁺ | Na⁺ | Na⁺ | Na⁺ | Na⁺ | Na⁺ | Na⁺ |
| Graft amount | 8 | 8 | 8 | 8 | 8 | 8 | 8 |
| Acidic polymer cation | NH4⁺ | NH4⁺ | NH4⁺ | NH4⁺ | NH4⁺ | NH4⁺ | NH4⁺ |
| Acidic polymer amount | 0.5 | 1 | 0.1 | 0.1 | 0.1 | 0.1 | 0.1 |
| Acidic polymer Mw | 10000 | 10000 | 10000 | 10000 | 10000 | 10000 | 10000 |
| CMC cation | NH4⁺ | NH4⁺ | Na⁺ | NH4⁺ | NH4⁺ | NH4⁺ | NH4⁺ |
| CMC amount | 1 | 1 | 1 | 1 | 1 | 1 | 1 |
| Granulation method | Spray drying | Spray drying | Spray drying | Spray drying | Spray drying | Fluidized bed | Spray drying |
| Rotation number | 25000 | 25000 | 25000 | 25000 | 25000 | - | 36000 |
| Granulation temperature | 180 | 180 | 180 | 165 | 250 | 180 | 180 |
| Particle size | 85 | 90 | 70 | 65 | 73 | 130 | 40 |
| Angle of repose | 27 | 27 | 36 | 37 | 20 | 40 | 39 |
| Weight per unit area | 13.0 | 13.0 | 13.0 | 13.0 | 13.0 | 13.0 | 13.0 |
| Density | 1.65 | 1.65 | 1.65 | 1.65 | 1.65 | 1.65 | 1.65 |
| Peel | A | A | A | A | B | B | C |
| SB | B | C | C | B | A | A | A |
| Cycle | B | C | A | B | C | C | B |
| High-temperature storage | A | A | A | B | A | A | A |

**Table 3**

| | Ex. 15 | Ex. 16 | Ex. 17 | Comp. Ex. 1 | Comp. Ex. 2 | Comp. Ex. 3 | Comp. Ex. 4 | Comp. Ex. 5 |
|---|---|---|---|---|---|---|---|---|
| Active material amount | 97.2 | 97.2 | 96.9 | 97.4 | 97.4 | 97.4 | 97.4 | 97.4 |
| Auxiliary agent type | Graphene | CNT | CNT | - | - | - | - | - |
| Auxiliary agent amount | 0.2 | 0.2 | 0.5 | - | - | - | - | - |
| Granular polymer amount | 1.5 | 1.5 | 1.5 | 1.5 | 1.5 | 1.5 | 1.5 | 1.5 |
| Granular polymer diameter | 0.5 | 0.5 | 0.5 | 0.5 | 0.5 | 0.5 | 0.5 | 0.5 |
| St amount | 30 | 30 | 30 | 30 | 30 | 30 | 80 | 30 |
| Bd amount | 70 | 70 | 70 | 70 | 70 | 70 | 20 | 70 |
| Graft type | MAA | MAA | MAA | MAA | MAA | MAA | MAA | None |
| Graft cations | NH4⁺ | NH4⁺ | NH4⁺ | Na⁺ | Na⁺ | Na⁺ | Na⁺ | None |
| Graft amount | 8 | 8 | 8 | 8 | 8 | 8 | 8 | None |
| Acidic polymer cation | NH4⁺ | NH4⁺ | NH4⁺ | NH4⁺ | NH4⁺ | NH4⁺ | NH4⁺ | NH4⁺ |
| Acidic polymer amount | 0.1 | 0.1 | 0.1 | 0.1 | 0.1 | 0.1 | 0.1 | 0.1 |
| Acidic polymer Mw | 10000 | 10000 | 10000 | 10000 | 10000 | 10000 | 10000 | 10000 |
| CMC cation | NH4⁺ | NH4⁺ | NH4⁺ | NH4⁺ | NH4⁺ | NH4⁺ | NH4⁺ | NH4⁺ |
| CMC amount | 1 | 1 | 1 | 1 | 1 | 1 | 1 | 1 |
| Granulation method | Spray drying | Spray drying | Spray drying | (Appli cation) | (Appli cation) | Spray drying | Spray drying | Spray drying |
| Rotation number | 25000 | 25000 | 25000 | - | - | 25000 | 25000 | 25000 |
| Granulation temperature | 180 | 180 | 180 | 130 | 180 | 150 | 180 | 150 |
| Particle size | 70 | 70 | 70 | - | - | 68 | 71 | 64 |
| Angle of repose | 26 | 26 | 25 | - | - | 45 | 15 | 37 |
| Weight per unit area | 13.0 | 13.0 | 13.0 | 13.0 | 13.0 | 13.0 | 13.0 | 13.0 |
| Density | 1.65 | 1.65 | 1.65 | 1.65 | 1.65 | 1.65 | 1.65 | 1.65 |
| Peel | A | A | SA | B | E | B | E | E |
| SB | A | A | A | E | C | E | D | D |
| Cycle | SA | SA | SA | D | E | E | D | E |
| High-temperature storage | A | A | SA | E | D | B | D | D |

The meanings of the abbreviations in the tables are as follows:
Active material amount: amount of a negative electrode active material used for producing composite particles (unit: part by weight)
Granular polymer amount: amount of a granular polymer used in producing the composite particles (unit: part by weight).
Granular polymer diameter: volume-average particle diameter of a granular polymer used for producing composite particles (unit: µm).
St amount: amount of styrene used for producing the granular polymer (unit: weight kg relative to 100 kg of the total of styrene and butadiene);
Bd amount: amount of butadiene used for producing the granular polymer (unit: weight kg relative to 100 kg of the total of styrene and butadiene)
Graft type: monomer type used for the formation of graft chains in the production of the granular polymer. MAA: methacrylic acid, AA: acrylic acid.
Graft cations: type of counter cation of carboxyl group of graft chain in granular polymer used for producing composite particles.
Graft amount: ratio of graft portion relative to backbone portion of the graft polymer (unit: part by weight relative to 100 parts by weight of the block polymer of the backbone portion)
Acidic polymer cation: type of counter cation of carboxyl group of acidic functional group-containing water-soluble polymer used for producing composite particles.
Acidic polymer amount: amount of acidic functional group-containing water-soluble polymer used for producing composite particles (unit: part by weight)
Acidic polymer Mw: weight-average molecular weight of acidic functional group-containing water-soluble polymer used for producing composite particles.
CMC cation: type of counter cation of carboxyl group of carboxymethylcellulose used for producing composite particles.
CMC amount: amount of carboxymethylcellulose used for producing composite particles (unit: part by weight).
Granulation method: type of granulation method in producing composite particles. Spray drying: spray drying granulation using a spray dryer. Fluidized bed: fluidized bed granulation. (Application): Granulation was not performed because electrode formation by application of a slurry was performed.
Rotation number: number of rotation of atomizer (unit: rpm) when spray drying granulation was performed.
Granulation temperature: temperature at the time of granulation (unit: °C) when spray drying granulation or fluidized bed granulation was performed.
Particle size: volume-average particle diameter of composite particles (unit: µm).
Angle of repose: angle of repose of composite particle (unit: degree).
Weight per unit area: weight per unit area of negative electrode mixture layer (unit: mg/cm²)
Density: density of negative electrode (unit: g/cm³).
Peel: evaluation result of peel strength.
SB: evaluation result of spring back.
Cycle: evaluation result of cycle characteristics.
High-temperature storage: evaluation result of high-temperature storage characteristics.

As is clear from the results of Examples and Comparative Examples, when a negative electrode for a secondary battery and a secondary battery are produced by using specific composite particles defined in the present invention, good characteristics are obtained in a well-balanced manner in all of peel strength, spring back suppression, cycle characteristics, and high temperature storage characteristics. On the other hand, when the electrode was formed without forming composite particles (Comparative Examples 1 to 2), when the angle of repose of composite particles was outside the range specified in the present application (Comparative Examples 3 to 4), and when the granular polymer constituting the composite particles did not satisfy the requirements specified in the present application (Comparative Example 5), it was not possible to obtain good characteristics with good balance in all of peel strength, spring back suppression, cycle characteristics, and high-temperature storage characteristics.

## Claims

1. A composite particle for an electrochemical element comprising an electrode active material and a granular polymer, wherein
the granular polymer is composed of a graft polymer,
the graft polymer has a molecular structure which includes a backbone portion and a graft portion bonded to the backbone portion, the graft portion being a hydrophilic graft chain,
the backbone portion contains an aromatic vinyl block region composed of an aromatic vinyl monomer unit and a conjugated diene region composed of an aliphatic conjugated diene unit of 4 or more carbon atoms, and a content ratio of the conjugated diene region in 100% by weight of the backbone portion is 50% by weight or more and 99% by weight or less,
a content ratio of the graft portion in the graft polymer is 1 part by weight or more and 40 parts by weight or less relative to 100 parts by weight of the backbone portion, and
an angle of repose of the composite particle is 20° to 40°.

2. The composite particle for an electrochemical element according to claim 1, further comprising carboxymethylcellulose.

3. The composite particle for an electrochemical element according to claim 1 or 2, further comprising an acidic functional group-containing water-soluble polymer with a weight-average molecular weight (MW) of 1,500 to 50,000.

4. The composite particle for an electrochemical element according to any one of claims 1 to 3, further comprising an electroconductive auxiliary agent.

5. The composite particle for an electrochemical element according to claim 4, wherein the electroconductive auxiliary agent contains any of graphene and carbon nanotube.

6. The composite particle for an electrochemical element according to any one of claims 1 to 5, wherein a volume-average particle diameter thereof is 10 µ to 200 µm.

7. A producing method of the composite particle for an electrochemical element according to any one of claims 1 to 6, comprising:
a step (A) of granulating a mixture containing an electrode active material and a granular polymer.

8. The producing method according to claim 7, wherein an ammonium salt of the graft polymer is used as a material for preparing the mixture in the step (A).

9. The producing method according to claim 7 or 8, wherein:
the mixture contains carboxymethylcellulose, an acidic functional group-containing water-soluble polymer, or both of them, and
an ammonium salt of the carboxymethylcellulose, an ammonium salt of the acidic functional group-containing water-soluble polymer, or both of them are used as a material for preparing the mixture in the step (A).

10. An electrode for an electrochemical element comprising a current collector, and a mixture layer disposed on the current collector, wherein
the mixture layer includes the composite particle according to any one of claims 1 to 6.

11. The electrode for an electrochemical element according to claim 10, wherein the mixture layer is a layer formed by pressure forming of the composite particle.

12. The electrode for an electrochemical element according to claim 11, wherein the pressure forming is roll pressure forming.

13. An electrochemical element comprising the electrode for an electrochemical element according to any one of claims 10 to 12.
